# FASCICULE DE BREVET EUROPEEN

(11) **EP 0 903 949 B1**
(45) Date de publication et mention de la délivrance du brevet: **24.01.2007**
(21) Numéro de dépôt: 98402232.7
(22) Date de dépôt: 10.09.1998
(51) Int. Cl.: H04Q 7/32, H04Q 7/24

(54) **Procédé d'initialisation de liaison entre un terminal mobile et une station de base domestique**
Verfahren zur Initialisierung einer Verbindung zwischen einer Mobilstation und einer Haushaltsbasisstation
Method of initialisation of a link between a mobile station and a domestic base station

(30) Priorité: 23.09.1997 FR 9711834; 25.03.1998 FR 9803701
(43) Date de publication de la demande: 24.03.1999
(73) Titulaire: ALCATEL, 75008 Paris (FR)
(72) Inventeur: Blanke, Gero, 71711 Murr (DE); Pinault, Francis, 92270 Bois-Colombes (FR); Messiet, Samira, 78000 Versailles (FR)
(74) Mandataire: Lamoureux, Bernard

(56) Documents cités:
- EP-A- 0 563 898
- EP-A- 0 767 426
- EP-A- 0 806 878
- WO-A-93/16548
- WO-A-95/02927
- WO-A-97/09834
- WO-A-97/21315
- FR-A- 2 693 863
- US-A- 4 980 907
- US-A- 5 668 875

## Description

La présente invention a pour objet un procédé d'initialisation d'une liaison entre un terminal mobile d'un réseau public mobile et une station de base domestique, par exemple une station de base d'un réseau public commuté.

L'invention concerne aussi un service d'initialisation d'une telle liaison.

L'invention concerne le domaine de la téléphonie sans fil. Les systèmes de téléphonie sans fil (acronyme CTS de l'expression anglaise "cordless telephony systems") existant actuellement sont proposés sous forme de combinés ou terminaux et de stations de base présentant une liaison radio de portée limitée, par exemple limitée à un usage domestique dans un appartement ou une maison. Il est possible, dans le futur, que de tels systèmes de téléphonie opèrent dans des bandes de fréquences déjà couvertes et utilisées par des opérateurs de réseaux publics mobiles. Ceci pose un problème de gestion des fréquences.

Un autre problème est la gestion des paramètres de sécurité des liaisons entre les combinés et les stations de base.

Encore un autre problème est celui de la multiplication des combinés portables; un abonné peut posséder un combiné portable pour un réseau public mobile, et un combiné pour un téléphone sans fil. GB-A-2 282 735 mentionne qu'il a été suggéré d'utiliser le même combiné portable pour le réseau public mobile et pour le réseau public commuté. Ce document mentionne encore que cette solution n'est pas avantageuse du fait des complications résultant de la gestion des fréquences nécessaire pour empêcher les interférences entre stations de base domestiques distinctes, ou des dispositifs nécessaires pour éviter de telles interférences, par exemple par allocation dynamique des canaux.

L'utilisation d'un combiné portable unique pour le réseau public mobile et pour une station de base domestique est par exemple envisagée dans le système GSM CTS en cours de normalisation. Une des caractéristiques de ce système est le ou les sous-ensembles de fréquences utilisées pour la communication entre une station de base domestique et le terminal unique mobile pour le réseau public mobile et utilisé pour la communication avec une station de base domestique.

L'utilisation d'un schéma d'allocation dynamique des canaux, comme suggéré dans GB-A-2 282 735 nécessite que la station de base domestique et le terminal mobile soient initialisés avec les mêmes paramètres, et par exemple présentent la même fréquence de départ et le même algorithme de changement de fréquence. Une première solution à ce problème est d'initialiser les combinés portables et les stations de base domestiques avec les mêmes paramètres; ceci empêche les allocations individuelles de canaux, ainsi qu'une allocation dynamique des canaux; ceci empêche en outre de vendre séparément station de base domestique et combiné.

GB-A-2 282 735 propose un dispositif de routage automatique des appels, vers un combiné portable d'un réseau public mobile ou vers le réseau téléphonique commuté classique, en fonction de la distance entre le combiné portable et une station de base domestique; ce document propose de router automatiquement les appels vers le réseau téléphonique commuté lorsque le combiné se trouve au voisinage de la station de base; la proximité du combiné est détectée grâce à l'émission par le combiné de signaux de télémétrie à faible puissance et à bande étroite. Cette solution ne résout pas le problème de multiplicité des combinés, ni le problème de gestion des fréquences posé par l'extension des fréquences des réseaux publics mobiles.

US 5668875 décrit un terminal communicant avec une station de base avec l'envoi de l'identité de l'abonné entre le terminal et la station de base une fois que la liaison entre le terminal et la station de base a été établie.

WO 9709834 décrit un téléphone mobile capable de fonctionner soit avec un réseau cellulaire public, soit avec un réseau de radiocommunication privé, ainsi que des moyens permettant à ce téléphone de commuter automatiquement sur l'un ou l'autre des deux réseaux au fur et à mesure que l'utilisateur se déplace avec son téléphone.

L'invention propose donc une solution au problème de la gestion des paramètres des systèmes de téléphonie sans fil, qui permette d'utiliser un même combiné portable pour une liaison à un réseau public mobile et pour une liaison à une station de base domestique. Elle permet encore à un opérateur de réseau de contrôler les paramètres des liaisons avec les stations de base domestiques.

Elle résout en outre le problème nouveau de l'initialisation des stations de bases domestiques, dans des systèmes de téléphonie mobile utilisant un même combiné portable.

Elle résout encore le problème nouveau de la variation dans le temps de la position des stations de base domestiques, et permet un suivi dans le temps des paramètres de liaison allouée aux stations de base domestiques.

L'invention présente l'avantage de permettre une gestion des paramètres des liaisons avec les stations de base domestiques, par l'administrateur d'un réseau public mobile. Elle permet de vendre séparément les terminaux mobiles et les stations de base. Elle assure une authentification du terminal mobile comme de la station de base, avec une bonne sûreté.

Plus précisément, l'invention propose un procédé d'initialisation d'une liaison entre un terminal mobile d'un réseau public mobile et une station de base domestique communicant entre eux par une liaison téléphonique du réseau public mobile différente de la liaison à établir, comprenant
- l'authentification du terminal mobile par le réseau public mobile;
- la transmission au terminal depuis le réseau public mobile de données d'initialisation de la liaison avec la station de base domestique; et
- la transmission de ces données depuis le terminal mobile à la station de base domestique, sur une liaison distincte de la liaison à établir,
- l'établissement de la liaison entre la station de base domestique et le terminal mobile.

Dans un mode de réalisation, le procédé comprend en outre une étape d'appel par le terminal mobile d'un numéro de service spécial, avant l'étape d'authentification.

Avantageusement, les données d'initialisation de la liaison dépendent de la localisation du mobile lors de l'étape d'authentification.

Dans un autre mode de réalisation, les données d'initialisation comprennent une information temporelle.

L'étape d'authentification peut comprendre l'authentification normale du mobile par le réseau public mobile. Elle peut aussi comprendre la transmission par le mobile des informations requises pour l'initialisation de la liaison, telles que le type de station de base domestique.

Dans un mode de réalisation, l'étape de transmission des données depuis le mobile comprend le stockage des données d'initialisation dans une carte à puce du terminal mobile et l'introduction dans un appareil de lecture de la station de base domestique de ladite carte à puce.

Dans un autre mode de réalisation, l'étape de transmission des données depuis le mobile comprend la transmission des données depuis le terminal mobile vers la station de base, sur une liaison distincte de la liaison à établir. Cette liaison distincte peut être une liaison sans contact, tel qu'une liaison infra-rouge ou une liaison hyperfréquence pour cartes sans contact.

Avant l'étape de transmission des données depuis le mobile, le procédé peut comprendre une étape d'autorisation du transfert des donnés.

La station de base domestique est par exemple un terminal d'un réseau public commuté, ou encore un terminal d'un autocommutateur privé.

Elle concerne enfin un système de téléphonie sans fil, comprenant une station de base domestique et un terminal mobile d'un réseau public mobile communicant entre eux par une liaison téléphonique du réseau public mobile, caractérisé par une liaison entre la station de base et le terminal, distincte de ladite liaison téléphonique, ledit terminal mobile comprenant des moyens pour l'authentification du terminal mobile par le réseau public mobile, ledit terminal mobile comprenant des moyens pour la transmission au terminal depuis le réseau public mobile de données d'initialisation de la liaison avec la station de base domestique, ledit terminal mobile comprenant des moyens pour transmettre des données d'initialisation depuis le terminal mobile à la station de base domestique, sur une liaison distincte de la liaison à établir, et des moyens pour l'établissement de la liaison, distincte de ladite liaison téléphonique, entre la station de base domestique et le terminal mobile.De préférence, la liaison distincte est une liaison sans contact, telle qu'une liaison infra-rouge ou une liaison hyperfréquence pour cartes sans contact.

D'autres caractéristiques et avantages de l'invention apparaîtront à la lecture de la description qui suit de modes de réalisation de l'invention, donnée à titre d'exemple uniquement, et en référence au cas du GSM CTS.

Dans un tel cas, le but est d'établir une liaison entre un terminal mobile d'un réseau public mobile, i. e. le GSM, et une station de base raccordé par exemple à un réseau public commuté. Comme expliqué plus haut, une telle liaison permet d'utiliser un même combiné, d'une part sur le réseau public mobile, et d'autre part, à proximité de la station de base domestique, sur le réseau public commuté.

L'invention propose que les données d'initialisation de la liaison, telles que notamment les fréquences ou canaux à utiliser pour l'établissement de la liaison, la fréquence de départ, la loi de variation de la fréquence, ou la puissance maximale autorisée, ou de façon générale les autres paramètres utiles à la liaison soient transmises au terminal mobile depuis le réseau public mobile; ces données sont par exemple transmises par l'opérateur du réseau public mobile, qui peut ainsi gérer les fréquences utilisées localement par les terminaux mobiles; ces données peuvent aussi être transmises depuis le réseau mobile par un autre intervenant que l'opérateur.

La transmission des données depuis le réseau public mobile permet d'utiliser une authentification du terminal mobile, par exemple dans le cas du GSM en utilisant les procédures d'authentification du réseau.

On donne maintenant un exemple de mise en oeuvre de l'invention dans un GSM CTS. Un terminal mobile désirant établir une liaison avec une station de base domestique se connecte au service correspondant, par exemple par appel d'un numéro de service fixe ou donné. L'autorisation d'établissement de la liaison peut être accordée de diverses façons : par exemple, le terminal mobile en cause peut être enregistré par l'opérateur ou le service en tant qu'utilisateur autorisé à établir une telle liaison; il est aussi possible de fournir à un terminal mobile une carte à puce spéciale autorisant uniquement l'appel du service en cause ou encore prévoir sur la carte à puce de l'utilisateur une autorisation d'établir une liaison; on peut aussi prévoir que le service fournissant les données d'initialisation présente un numéro spécial qui n'est accessible qu'avec une carte à puce spéciale; on peut encore prévoir un mot de passe, ou toute autre procédure appropriée.

Une fois la liaison avec le service établie, le terminal est identifié, en utilisant les procédures d'authentification du réseau public mobile, avec la sûreté associée à ces procédures. On évite les problèmes d'insécurité des procédures d'initialisation de l'art antérieur.

Les informations nécessaires pour déterminer les données d'initialisation de la liaison peuvent être stockées sur la carte à puce du terminal pour être transmises au service; elles peuvent aussi être fournies par l'abonné utilisant le terminal, ou encore être fournies par l'opérateur du service; il est aussi possible de les obtenir directement de l'abonné lorsque celui-ci demande une autorisation d'établissement ultérieur d'une liaison. Ainsi, les informations de position du terminal mobile lorsqu'il demande l'établissement d'une liaison sont typiquement fournies par le réseau public mobile en fonction de la cellule du réseau dans laquelle se trouve le terminal; le type de la station de base domestique avec laquelle la liaison doit être établie peut par exemple être fourni par l'abonné sous forme d'un code au moment de l'établissement de la connexion avec le service.

Les données nécessaires à l'initialisation de la liaison peuvent ensuite être transmises au terminal depuis le réseau public mobile, le cas échéant avec un tampon ou sceau temporel, comme expliqué plus bas; ces données sont stockées dans la carte à puce de l'abonné. Les données transmises depuis le terminal mobile sont ensuite transmises depuis le terminal mobile à la station de base, de sorte à permettre ensuite l'établissement de la liaison; en effet, après cette étape, le terminal mobile et la -station de base domestique disposent tous deux des données d'initialisation. Cette étape de transmission peut s'effectuer de diverses manières; idéalement, cette étape de transmission est au moins aussi sûre que l'étape d'authentification du terminal mobile.

Dans le cas du GSM, les données d'initialisation de la liaison peuvent avantageusement être stockées dans la carte à puce (carte SIM) du terminal mobile, ou dans une carte spécifique dédiée à l'établissement de la liaison avec la station de base domestique; la transmission des données à la station de base domestique peut alors s'effectuer simplement en introduisant la carte SIM correspondante dans un appareil de lecture de la station de base domestique. Ceci nécessite alors simplement de prévoir sur la station de base domestique un appareil de lecture de carte à puce.

Dans un cas comme dans l'autre, il n'est pas nécessaire que la station de base domestique se trouve dans une zone couverte par le réseau public mobile.

Les données nécessaires à l'initialisation peuvent être contenues dans la carte SIM du terminal mobile, et être transférées à la station de base par l'intermédiaire de la carte SIM, en prévoyant un lecteur de carte dans la station de base, comme expliqué plus haut. Il est encore possible de prévoir d'autres modes de transfert des données d'initialisation de la liaison entre le terminal mobile et la station de base domestique. On peut ainsi prévoir entre le terminal mobile et la station de base domestique une liaison séparée, sans contact. Des exemples de telles liaisons sont les liaisons infrarouges, ou les liaisons hyperfréquences pour lecture de cartes sans contact.

Le fonctionnement de l'invention dans ce cas est par exemple le suivant. La station de base détecte la présence d'un terminal mobile; dans le cas d'une liaison infra-rouge, cette détection peut être assurée si l'utilisateur approche le terminal de la station de base, et dispose l'émetteur récepteur infra-rouge du terminal face à celui de la station de base. Dans le cas d'une liaison hyperfréquences, la station de base peut détecter la présence d'une carte à puce à proximité.

Après avoir détecté la présence d'un terminal mobile, la station de base envoie vers le terminal mobile une demande des données d'initialisation, sur la liaison séparée. Cette demande est reçue par le terminal mobile. On peut prévoir dans ce cas que le terminal mobile ne transmet les informations nécessaires vers la station de base que sur autorisation de l'utilisateur; par exemple, le transfert des données vers la station de base peut n'être autorisé que sur entrée sur le terminal mobile d'un code confidentiel, ou par tout autre démarche d'authentification de l'utilisateur sur le terminal mobile. Si l'autorisation est donnée, ou si l'autorisation n'est pas demandée, les donnéees nécessaires à l'initialisation sont transmises par le terminal mobile vers la station de base, sur la liaison séparée. La liaison entre la station de base et le terminal mobile peut alors être établie.

Un tel mode de réalisation permet d'éviter à l'utilisateur toute démarche supplémentaire, autre que le cas échéant une demande d'authentification; le service est alors disponible sans que l'utilisateur ne doive introduire sa carte dans la station de base domestique. Elle évite aussi les problèmes qui pourraient se poser si l'utilisateur oublie la carte dans la station de base.

En outre, il est clair que ce mode de réalisation peut se concevoir indépendamment de l'origine des données nécessaires à l'initialisation de la liaison entre le terminal mobile et la station de base. Le transfert des données depuis le terminal mobile vers la station de base, par déplacement d'une carte SIM ou encore sur une liaison séparée, est utilisable à chaque fois que le terminal mobile entre dans la zone de couverture de la station de base domestique; les données d'initialisation ne sont pas nécessairement mise à jour depuis le réseau public à chaque fois que le terminal entre dans cette zone de couverture. Les données pourraient aussi être stockées dans la carte du terminal mobile, et ne pas être mises à jour depuis le réseau public mobile.

Dans le cas où les données sont transmises depuis le réseau public mobile, pour permettre une utilisation des données d'initialisation dans une zone géographique limitée, les données d'initialisation peuvent être transmises avec un tampon ou un sceau temporel; il est ainsi possible pour la station de base domestique de savoir à quel moment les données d'initialisation ont été reçues par le terminal mobile. On peut alors ne permettre l'établissement de la liaison que si les données d'initialisation sont transmises à la station de base domestique dans un intervalle de temps donné suivant leur réception, ou encore que si la liaison est établie pour la première fois dans un intervalle de temps donné suivant la réception des données. Ceci assure une limitation du déplacement du mobile entre le moment où il reçoit les données et le moment où ces données sont transmises à la station de base domestique. De la sorte, les données d'initialisation de la liaison, et par exemple les canaux alloués à la liaison, sont utilisés dans une zone géographique contrôlée par l'opérateur du réseau.

Si la station de base est déplacée, son alimentation électrique est coupée et ceci peut être utilisé pour indiquer un déplacement de la liaison de base nécessitant une nouvelle procédure d'initialisation de la liaison au nouvel emplacement de la station de base, le cas échéant avec de nouveaux paramètres; ainsi, l'invention permet une gestion dynamique des données d'initialisation des différentes liaisons mises en oeuvre par les mobiles du réseau public mobile.

Il est clair que l'invention permet de vendre séparément les terminaux mobiles et les stations de base domestiques, et permet une évolution des uns comme des autres; elle permet aussi l'initialisation de plusieurs liaisons, avec des stations de base différentes, en des lieux différents. Elle permet aussi à une station de base d'être initialisée et d'établir des liaisons avec différents terminaux mobiles.

Du point de vue de l'opérateur du réseau, ou de l'autorité gérant l'allocation des paramètres pour les liaisons entre les terminaux mobiles et les stations de base domestiques, l'invention permet de fournir un service de gestion des liaisons. Ce service comprend une étape de transmission au terminal mobile depuis le réseau public mobile de données d'initialisation de la liaison, après une étape d'authentification d'un terminal mobile par le réseau public mobile. Comme expliqué plus haut, cette étape d'authentification peut s'effectuer en utilisant simplement les capacités d'authentification du réseau, telles que celles du GSM. Ceci peut s'effectuer après un appel du mobile à un numéro donné du réseau public mobile.

La procédure d'établissement de la liaison, une fois que le terminal mobile et la station de base disposent des données d'initialisation sont connues de l'homme du métier et peuvent être mises en oeuvre facilement; il en est de même pour la reconnaissance par la station de base domestique de la proximité du terminal; on peut à cet effet se reporter aux méthodes mentionnées dans le document GB-A- 2 282 735.

Bien entendu, la présente invention n'est pas limitée aux exemples et modes de réalisation décrits et représentés, mais elle est susceptible de nombreuses variantes accessibles à l'homme de l'art. On pourrait ainsi utiliser d'autres types de réseaux que le GSM ou que le réseau public commuté.

## Revendications

1. Procédé d'initialisation d'une liaison entre un terminal mobile d'un réseau public mobile et une station de base domestique communicant entre eux par une liaison téléphonique du réseau public mobile différente de la liaison à établir, comprenant
- l'authentification du terminal mobile par le réseau public mobile;
- la transmission au terminal depuis le réseau public mobile de données d'initialisation de la liaison avec la station de base domestique; et
- la transmission de ces données depuis le terminal mobile à la station de base domestique, sur une liaison distincte de la liaison à établir
- l'établissement de la liaison entre la station de base domestique et le terminal mobile.

2. Procédé selon la revendication 1, **caractérisé en ce qu'**il comprend en outre une étape d'appel par le terminal mobile d'un numéro de service spécial, avant l'étape d'authentification.

3. Procédé selon la revendication 1 ou 2, **caractérisé en ce que** les données d'initialisation de la liaison dépendent de la localisation du mobile lors de l'étape d'authentification.

4. Procédé selon la revendication 1, 2 ou 3, **caractérisé en ce que** les données d'initialisation comprennent une information temporelle.

5. Procédé selon l'une des revendications 1 à 4, **caractérisé en ce que** l'étape d'authentification comprend l'authentification normale du mobile par le réseau public mobile.

6. Procédé selon l'une des revendications 1 à 4, **caractérisé en ce que** l'étape d'authentification du mobile comprend la transmission par le mobile des informations requises pour l'initialisation de la liaison, telles que le type de station de base domestique.

7. Procédé selon l'une des revendications 1 à 6, **caractérisé en ce que** l'étape de transmission des données depuis le mobile comprend le stockage des données d'initialisation dans une carte à puce du terminal mobile et l'introduction dans un appareil de lecture de la station de base domestique de ladite carte à puce.

8. Procédé selon l'une des revendications 1 à 6, **caractérisé en ce que** l'étape de transmission des données depuis le mobile comprend la transmission des données depuis le terminal mobile vers la station de base, sur une liaison distincte de la liaison à établir.

9. Procédé selon la revendication 8, **caractérisé en ce que** la liaison distincte est une liaison sans contact, tel qu'une liaison infra-rouge ou une liaison hyperfréquence pour cartes sans contact.

10. Procédé selon la revendication 8 ou 9, **caractérisé en ce qu'**il comprend avant l'étape de transmission des données depuis le mobile une étape d'autorisation du transfert des donnés.

11. Procédé selon l'une des revendications 1 à 10, **caractérisé en ce que** la station de base domestique est un terminal d'un réseau public commuté.

12. Procédé selon l'une des revendications 1 à 10, **caractérisé en ce que** la station de base domestique est un terminal d'un autocommutateur privé.

13. Système de téléphonie sans fil, comprenant une station de base domestique et un terminal mobile d'un réseau public mobile communicant entre eux par une liaison téléphonique du réseau public mobile, **caractérisé par** une liaison entre la station de base et le terminal, distincte de ladite liaison téléphonique, ledit terminal mobile comprenant des moyens pour l'authentification du terminal mobile par le réseau public mobile, ledit terminal mobile comprenant des moyens pour la transmission au terminal depuis le réseau public mobile de données d'initialisation de la liaison avec la station de base domestique, ledit terminal mobile comprenant des moyens pour transmettre des données d'initialisation depuis le terminal mobile à la station de base domestique, sur une liaison distincte de la liaison à établir, et des moyens pour l'établissement de la liaison, distincte de ladite liaison téléphonique, entre la station de base domestique et le terminal mobile.

14. Système selon la revendication 13, **caractérisé en ce que** la liaison distincte est une liaison sans contact, telle qu'une liaison infra-rouge ou une liaison hyperfréquence pour cartes sans contact.

## Claims

1. A method of initializing a link between a mobile terminal of a public mobile network and a domestic base station communicating with each other via a telephone link of the public mobile network other than the link that is to be set up, the method comprising:
· the mobile public network authenticating the mobile terminal;
· the mobile public network transmitting to the terminal data for initializing the link with the domestic base station; and
· the mobile terminal transmitting said data to the domestic base station over a link separate from the link to be set up; and
· setting up the link between the domestic base station and the mobile terminal.

2. A method according to claim 1, **characterized in that** it further comprises a step of the mobile terminal calling a special service number prior to the authentication step.

3. A method according to claim 1 or claim 2, **characterized in that** the link initialization data depends on the location of the mobile terminal during the authentication step.

4. A method according to claim 1, 2, or 3, **characterized in that** the initialization data includes time information.

5. A method according to any one of claims 1 to 4, **characterized in that** the authentication step comprises the normal authentication of the mobile terminal by the mobile public network.

6. A method according to any one of claims 1 to 4, **characterized in that** the step of authenticating the mobile terminal includes the mobile terminal transmitting information required for initializing the link, such as the type of domestic base station.

7. A method according to any one of claims 1 to 6, **characterized in that** the step of transmitting data from the mobile terminal comprises storing initialization data in a smart card of the mobile terminal and inserting said smart card into a reader of the domestic base station.

8. A method according to any one of claims 1 to 6, **characterized in that** the step of transmitting data from the mobile terminal comprises transmitting data from the mobile terminal to the base station over a link that is separate from the link to be set up.

9. A method according to claim 8, **characterized in that** the separate link is a contactless link, such as an infrared link or a microwave link for contactless cards.

10. A method according to claim 8 or claim 9, **characterized in that** prior to the step of transmitting data from the mobile terminal, it comprises a step of authorizing data transfer.

11. A method according to any one of claims 1 to 10, **characterized in that** the domestic base station is a terminal of the public switched telephony network.

12. A method according to any one of claims 1 to 10, **characterized in that** the domestic base station is a terminal of a private automatic branch exchange.

13. A wireless telephony system comprising a domestic base station and a mobile terminal of a mobile public network communicating with each other via a telephone link of the mobile public network, **characterized by** a link between the base station and the terminal that is separate from said telephone link, said mobile terminal comprising means for authenticating the mobile terminal by the mobile public network, said mobile terminal comprising means enabling the mobile public network to transmit to the terminal data for initializing the link with the domestic base station, said mobile terminal comprising means for transmitting the initialization data from the mobile terminal to the domestic base station over a link that is separate from the link to be set up, and means for setting up the link separate from said telephone link, between the domestic base station and the mobile terminal.

14. A system according to claim 13, **characterized in that** the separate link is a contactless link, such as an infrared link or a microwave link for contactless cards.

## Patentansprüche

1. Verfahren zur Initialisierung einer Verbindung zwischen einer Mobilstation in einem öffentlichen Mobilfunknetz und einer Haushaltsbasisstation, die über eine Telefonverbindung des öffentlichen Mobilfunknetzes miteinander kommunizieren, die sich von der zu herzustellenden Verbindung unterscheidet, das Folgendes umfasst:
- die Authentisierung der Mobilstation durch das öffentliche Mobilfunknetz;
- die Übertragung von Initialisierungsdaten von dem öffentlichen Mobilfunknetz an die Station für die Verbindung mit der Haushaltsbasisstation; und
- die Übertragung dieser Daten von der Mobilstation an die Haushaltsbasisstation über eine andere Verbindung als die herzustellende Verbindung;
- Herstellung der Verbindung zwischen der Haushaltsbasisstation und der Mobilstation.

2. Verfahren gemäß Anspruch 1, **dadurch gekennzeichnet, dass** es außerdem, vor dem Schritt zu Authentisierung, einen Schritt zum Anruf einer speziellen Servicerufnummer durch die Mobilstation umfasst.

3. Verfahren gemäß Anspruch 1 oder 2, **dadurch gekennzeichnet, dass** die Initialisierungsdaten der Verbindung von dem Standort der Mobilstation während des Schrittes zur Authentisierung abhängig sind.

4. Verfahren gemäß Anspruch 1, 2 oder 3, **dadurch gekennzeichnet, dass** die Initialisierungsdaten eine zeitliche Information umfassen.

5. Verfahren gemäß einem der Ansprüche 1 bis 4, **dadurch gekennzeichnet, dass** der Schritt zur Authentisierung die normale Authentisierung der Mobilstation durch das öffentliche Mobilfunknetz umfasst.

6. Verfahren gemäß einem der Ansprüche 1 bis 4, **dadurch gekennzeichnet, dass** der Schritt zur Authentisierung der Mobilstation die Übertragung der zur Initialisierung der Verbindung erforderlichen Informationen, wie beispielsweise den Typ der Haushaltsbasisstation, durch die Mobilstation umfasst.

7. Verfahren gemäß einem der Ansprüche 1 bis 6, **dadurch gekennzeichnet, dass** der Schritt zur Übertragung der Daten von der Mobilstation aus die Speicherung der Initialisierungsdaten auf einer Chipkarte der Mobilstation und die Einführung der genannten Chipkarte in ein Lesegerät der Haushaltsbasisstation umfasst.

8. Verfahren gemäß einem der Ansprüche 1 bis 6, **dadurch gekennzeichnet, dass** der Schritt zur Übertragung der Daten von der Mobilstation aus die Übertragung der Daten von der Mobilstation an die Basisstation über eine andere Verbindung als die herzustellende Verbindung umfasst.

9. Verfahren gemäß Anspruch 8, **dadurch gekennzeichnet, dass** es sich bei der anderen Verbindung um eine kontaktfreie Verbindung handelt, wie beispielsweise eine Infrarot-Verbindung oder eine Ultrahochfrequenz-Verbindung für kontaktfreie Karten.

10. Verfahren gemäß Anspruch 8 oder 9, **dadurch gekennzeichnet, dass** es vor dem Schritt zur Übertragung der Daten von der Mobilstation aus einen Schritt zur Freigabe des Datentransfers umfasst.

11. Verfahren gemäß einem der Ansprüche 1 bis 10, **dadurch gekennzeichnet, dass** es sich bei der Haushaltsbasisstation um eine Station eines öffentlichen Wählnetzes handelt.

12. Verfahren gemäß einem der Ansprüche 1 bis 10, **dadurch gekennzeichnet, dass** es sich bei der Haushaltsbasisstation um eine Station einer Hauszentrale mit Selbstwählbetrieb ohne Amtsanschluss handelt.

13. Drahtloses Fernsprechsystem, das eine Haushaltsbasisstation und eine Mobilstation eines öffentlichen Mobilfunknetzes umfasst, die über eine Telefonverbindung des öffentlichen Mobilfunknetzes miteinander kommunizieren, **gekennzeichnet durch** eine Verbindung zwischen der Basisstation und der Mobilstation, die sich von der genannten Telefonverbindung unterscheidet, wobei die genannte Mobilstation Mittel zur Authentisierung der Mobilstation **durch** das öffentliche Mobilfunknetz umfasst, wobei die genannte Mobilstation Mittel zur Übertragung von Initialisierungsdaten für die Verbindung mit der Haushaltsbasisstation an die Station von dem öffentlichen Mobilfunknetz aus umfasst, wobei die genannte Mobilstation Mittel zur Übertragung von Initialisierungsdaten von der Mobilstation an die Haushaltsbasisstation über eine andere Verbindung als die herzustellende Verbindung sowie Mittel zur Herstellung der Verbindung umfasst, die sich von der genannten Telefonverbindung zwischen der Haushaltsbasisstation und der Mobilstation unterscheidet.

14. System gemäß Anspruch 13, **dadurch gekennzeichnet, dass** es sich bei der anderen Verbindung um eine kontaktfreie Verbindung handelt, wie beispielsweise eine Infrarot-Verbindung oder eine Ultrahochfrequenz-Verbindung für kontaktfreie Karten.
